# EUROPÄISCHE PATENTANMELDUNG

(11) **EP 1 069 398 A2**
(43) Veröffentlichungstag der Anmeldung: **17.01.2001**
(21) Anmeldenummer: 00250240.9
(22) Anmeldetag: 14.07.2000
(51) Int. Cl.: G01B 5/255

(54) **Mobile Achsvermessungsstation**

(30) Priorität: 16.07.1999 DE 29912705 U
(71) Anmelder: Henschel, Uwe, 10119 Berlin (DE)
(72) Erfinder: Henschel, Uwe, 10119 Berlin (DE)
(74) Vertreter: Kietzmann, Manfred

(57) **Zusammenfassung**

Die standortunabhängige Achsvermessungsstation besteht aus einer mobile Einheit, beispielsweise einer Ladeplattform 10 eines Lastkraftwagen, mit einem oder mehreren Auffahrmöglichkeiten für Kraftfahrzeuge. Auf der Ladeplattform 10 sind Dreh- und Schiebeplatten 21 hinten und Drehteller 25 vorn angeordnet. Es wird ein vom Niveau des Achsmessarbeitsplatzes unabhängiges Achsmessgerät 15 genutzt.

Damit wird für jederman der Weg in eine bisher nicht vorhanden Möglichkeit eröffnet, elektronische Achsvermessung unmittelbar vor Ort und somit auch bei Motorsportveranstaltungen durchzuführen.

## Beschreibung

Die Erfindung betrifft einen Achsmessarbeitsplatz zum Vermessen der Spur, Spuränderung, Sturz, Nachlauf, Spreizung, Spurdifferenzwinkel, eingeschlossenen Winkel, maximalen Lenkwinkel, Rad- und Achsversatz, Spurbreitendifferenz sowie andere Fahrwerkswinkel an Kraftfahrzeugfahrwerken.
Es ist bekannt, derartige Achsmessarbeitspätze stationär in Werkstätten anzuordnen, wobei der Standort des Vermessungsgerätes und die benutzten Hebezeuge messtechnisch aufeinander abgestimmt sein müssen. Der Nachteil dieser Fahrwerksvermessungen besteht darin, dass sie auf Grund dieser messtechnischen Voraussetzungen standortgebunden sind.

Die Zugängigkeit zu solchen Achsmessarbeitsplätzen bei Motorsportveranstaltungen ist gerade für kleinere und somit auch für finanziell nicht so gut ausgerüstete Fahrer bzw. Rennteams nicht möglich. Es ist aber offensichtlich, dass auch schon kleine Korrekturen erhebliche fahrtechnische Vorteile mit sich bringen.

Aufgabe der Erfindung ist es, einen mobilen standortunabhängigen Achsmessarbeitsplatz zu schaffen. Gelöst wird diese Aufgabe mit den kennzeichnenden Merkmalen des Anspruches 1, vorteilhafte Ausgestaltungen sind Gegenstand der Unteransprüche.

In dem eine mobile Einheit mit einem oder mehreren Auffahrmöglichkeiten für Kraftfahrzeuge mit integrierten Dreh- und Schiebeplatten hinten und Drehtellern vorn versehen ist und ein vom Niveau des Achsmessarbeitsplatzes unabhängiges Achsmessgerät genutzt wird, entsteht eine standortunabhängige Achsvermessungsstation.

Damit wird für jederman der Weg in eine bisher nicht vorhanden Möglichkeit eröffnet, elektronische Achsvermessung unmittelbar vor Ort und somit auch bei Motorsportveranstaltungen durchzuführen.

Der Einsatz ist aber nicht darauf beschränkt. Vielmehr entsteht so die Möglichkeit, die Achsvermessung als eine eigenständige Dienstleistung für Kfz-Halter und auch für Automobilwerkstätten anzubieten.

In einer vorteilhaften Ausgestaltung sieht die Erfindung vor, dass mindestens ein Hebezeug oder ein Paar Fahrschienen Bestandteil der mobilen Einheit sind und diese mit Dreh- und Schiebeplatten hinten, sowie mit Drehtellern vorn versehen sind. Weiterhin ist vorgesehen, dass die mobile Einheit über eine eigene Energieversorgung für alle Betriebsmedien verfügt und/oder eine Fremdeinspeisung vorgesehen ist.

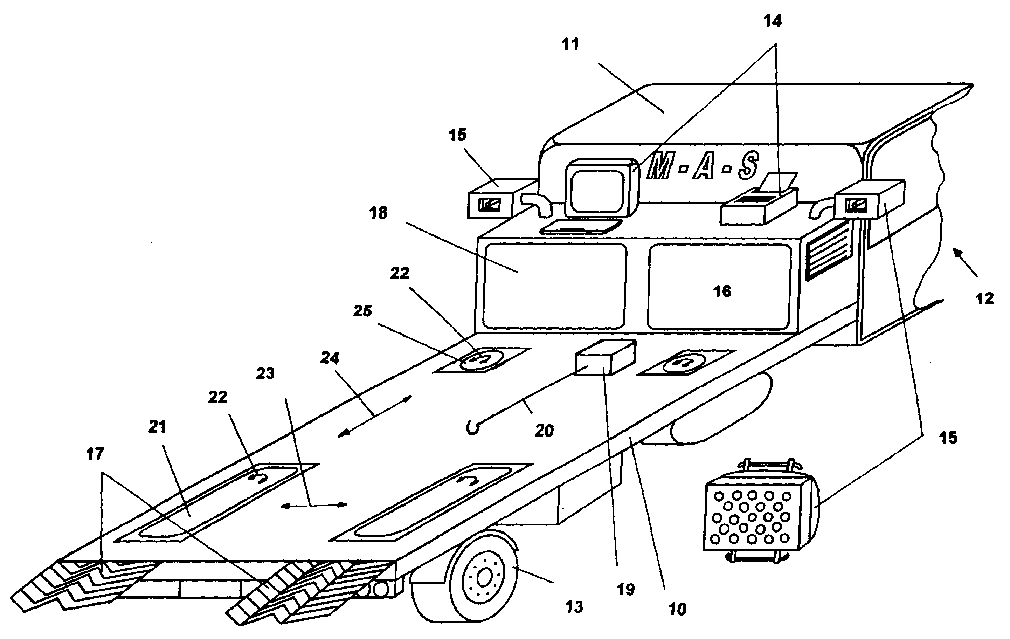

Eine Ausführung der Erfindung ist in der Zeichnung dargestellt. Die Fig. zeigt hier als mobile Einheit die Ladeplattform 10 eines Lastkraftwagen.

Die Ladeplattform 10 weist als Auffahrmöglichkeit Auffahrrampen 17 auf. Auf der Ladeplattform 10 sind die Dreh- und Schiebeplatten 21 hinter und die Drehteller 25 vorn angeordnet. Die Pfeile 22, 23, 24 zeigen die Bewegungsmöglichkeiten.

Als Achsmessgerät 15 kommen bei dieser Ausführung Infrarotmesskameras mit Radreflektoren, die an das zu vermessende Fahrzeug montiert werden, zum Einsatz (3D-Achsmesscomputer).

Die ermittelten Daten werden im Rechner 18 verarbeitet und mittels der Ausgabeeinrichtung 14 (Bildschirm, Drucker) ausgegeben.

Die mobile Einheit verfügt über eine Energieversorgung 16. Möglich ist auch eine Fremdeinspeisung.

Die Erfindung ist nicht auf die dargestellte Ausführung einer LKW-Plattform beschränkt. Ebenso kann als mobile Einheit ein Anhänger dienen oder eine transportfähige Palette.

Auch muss die Anordnung der Dreh- und Schiebeplatten 21 und der Drehteller 25 nicht auf einer durchgehenden Ladeplattform 10 erfolgen, sondern ein Paar Fahrschienen können diesen Zweck ebenfalls erfüllen.

### Bezugzeichenliste

- 10: Ladeplattform
- 11: Kabine
- 12: Motor
- 13: Räder
- 14: Bildschirm, Drucker
- 15: Achsmessgerät
- 16: Energieversorgung
- 17: Auffahrrampe
- 18: Rechner
- 19: Winde
- 20: Seil
- 21: Dreh- und Schiebeplatten
- 22: Bewegungsmöglichkeit
- 23: Bewegungsmöglichkeit
- 24: Bewegungsmöglichkeit
- 25: Drehteller

## Patentansprüche

1. Achsmessarbeitsplatz zur Fahrwerksvermessung bei Kraftfahrzeugen,
dadurch gekennzeichnet, dass
eine mobile Einheit mit einer oder mehreren Auffahrmöglichkeiten für Kraftfahrzeuge mit integrierten Dreh- und Schiebeplatten(21) hinten und Drehtellern (25) vorn versehen ist und ein oder mehrere vom Arbeitsplatzniveau unabhängig funktionierende Achsmesscomputer (14, 15, 18) eingesetzt sind.

2. Achsmessarbeitsplatz nach Anspruch 1, dadurch gekennzeichnet, dass
mindestens ein Hebezeug und/oder ein Paar Fahrschienen Bestandteil der mobilen Einheit sind.

3. Achsmessarbeitsplatz nach Anspruch 2, dadurch gekennzeichnet, dass
das Hebezeug und/oder die Fahrschienen mit Dreh- und Schiebeplatten (21) hinten und Drehtellern (25) vorn versehen sind.

4. Achsmessarbeitsplatz nach Anspruch 2, dadurch gekennzeichnet, dass
das Hebezeug über eine pneumatische oder über eine hydraulische oder eine elektrische Hubeinrichtung verfügt, deren Kombination eingeschlossen.

5. Achsmessarbeitsplatz nach Anspruch 1, dadurch gekennzeichnet, dass
der Achsmesscomputer (14, 15, 18) ein 3 D-Achsmesscomputer ist.

6. Achsmessarbeitsplatz nach Anspruch 1, dadurch gekennzeichnet, dass
die mobile Einheit eine eigene Energieversorgung (16) für alle erforderlichen Betriebsmedien besitzt und/oder eine Fremdeinspeisung vorgesehen ist
